# DEMANDE DE BREVET EUROPEEN

(11) **EP 4 331 953 A1**
(43) Date de publication de la demande: **06.03.2024**
(21) Numéro de dépôt: 23183988.7
(22) Date de dépôt: 06.07.2023
(51) Int. Cl.: B62D 21/03, B62D 21/15

(54) **LONGERON DE VÉHICULE AUTOMOBILE À RENFORCEMENT INTERNE ET STRUCTURE DE PLANCHER DE VÉHICULE ÉQUIPÉE D'UN TEL LONGERON**

(30) Priorité: 22.08.2022 FR 2208428
(71) Demandeur: Renault s.a.s, 92100 Boulogne Billancourt (FR)
(72) Inventeur: DELORD, Christian, 78640 Villiers-Saint-Frédéric (FR)

(57) **Abrégé**

L'invention concerne un longeron (10) de véhicule automobile à section transversale creuse comprenant un profilé (11) longitudinal à section transversale en forme de U comportant deux parois latérales (110, 111) reliées par une paroi de fond (112). Le longeron est renforcé par au moins un élément de renfort interne (14) disposé à l'intérieur du profilé. Cet élément de renfort interne (14) comprend une première paroi transversale (141) et une deuxième paroi transversale (142) s'étendant d'une paroi latérale (110) à l'autre du profilé, sur toute la hauteur de celui-ci, et une troisième paroi transversale (143) reliant les première et deuxième parois du côté opposé à la paroi de fond (112) du profilé. Des parois d'accostage (144-147) s'étendent depuis les premières et deuxième parois transversales contre les parois latérales du profilé, sur toute la hauteur de celui-ci, et y sont fixées. L'invention concerne également une structure de plancher équipée d'un tel longeron.

## Description

L'invention concerne un longeron de véhicule automobile à renforcement interne et une structure de plancher de véhicule équipée d'un tel longeron.

Il est fréquent de renforcer la structure des longerons de véhicule automobile pour leur conférer une résistance accrue aux déformations dues aux chocs, torsions, ou encore à la fixation d'un autre élément. Les longerons présentent en effet une section transversale creuse susceptible de s'écraser.

Afin d'augmenter leur résistance, on équipe généralement les longerons d'un ou plusieurs éléments de renfort positionnés là où une résistance accrue est recherchée. L'invention concerne plus particulièrement les longerons à section transversale creuse du type comprenant un profilé à section transversale en forme de U dont l'ouverture est fermée par une plaque. En général, le profilé à section transversale en U présente deux parois latérales en regard s'étendant longitudinalement et verticalement, reliées par une paroi de fond horizontale. La plaque de fermeture s'étend alors horizontalement. Dans la présente description, les directions verticale et horizontale sont définies par rapport à une position d'utilisation horizontale du longeron. Les directions longitudinale et transversale correspondent aux directions longitudinale et transversale du longeron.

Certains éléments de renfort sont situés à l'extérieur du longeron, ce qui peut gêner pour la fixation d'autres éléments de structure au longeron. On utilisera alors des éléments de renfort internes disposés à l'intérieur du profilé en U du longeron.

Certains éléments de renfort internes se présentent ainsi sous forme d'une paroi ou flasque s'étendant verticalement transversalement au longeron et dont les bords repliés sont fixés aux parois latérales en regard du profilé en U du longeron. Ce type d'élément de renfort, s'étendant sur toute la hauteur du longeron à l'intérieur de celui-ci, confère au longeron une résistance accrue à la torsion mais une faible amélioration de la résistance aux chocs latéraux.

D'autres éléments de renfort internes sont formés de deux parois parallèles disposées verticalement et transversalement au longeron et reliées l'une à l'autre par une paroi supérieure horizontale qui sert généralement d'élément de fixation. De tels éléments de renfort servent essentiellement à renforcer le longeron pour permettre la fixation d'un élément sur une face supérieure du longeron de sorte qu'ils ne s'étendent que sur une partie de la hauteur du longeron, mais ils procurent une faible amélioration de la résistance du longeron aux chocs latéraux et n'améliorent pas sa résistance à la torsion.

D'autres éléments de renfort internes sont formés de deux parois transversales disposées verticalement et reliées l'une à l'autre par une paroi longitudinale verticale, les différentes parois s'étendant sur toute la hauteur du longeron. Seules les parois transversales sont fixées aux longerons par des bords repliés ce qui peut limiter la résistance aux chocs latéraux du longeron et ne permet pas d'améliorer la résistance à la torsion.

Par ailleurs, il peut être avantageux de fixer directement au longeron différents éléments de structure sans nuire à la résistance du longeron.

Il existe donc un besoin pour améliorer le renforcement d'un longeron tout en permettant de fixer directement au longeron d'autres éléments.

A cet effet, la présente invention a pour objet un longeron de véhicule automobile à section transversale creuse comprenant :
- un profilé longitudinal à section transversale en forme de U comportant deux parois latérales reliées par une paroi de fond et une ouverture du côté opposé à la paroi de fond,
- une plaque fermant l'ouverture du profilé,
- au moins un élément de renfort interne disposé à l'intérieur du profilé,
caractérisé en ce que l'élément de renfort interne comprend :
- une première paroi transversale et une deuxième paroi transversale s'étendant chacune depuis une paroi latérale du profilé jusqu'à l'autre paroi latérale du profilé, sur toute la hauteur des parois latérales du profilé mesurée selon une direction perpendiculaire à la paroi de fond du profilé,
- une troisième paroi transversale reliant des bords des première et deuxième parois transversales du côté opposé à la paroi de fond du profilé, notamment parallèlement à celui-ci,
- deux premières parois d'accostage en appui chacune contre une paroi latérale du profilé et s'étendant chacune depuis un bord de la première paroi transversale dans une direction opposée à la deuxième paroi transversale, sur toute la hauteur des parois latérales du profilé, et,
- deux deuxièmes parois d'accostage en appui chacune contre une paroi latérale du profilé et s'étendant chacune depuis un bord de la deuxième paroi transversale dans une direction opposée à la première paroi transversale, sur toute la hauteur des parois latérales du profilé,
les premières et deuxièmes parois d'accostage étant solidarisées aux parois latérales du profilé.

Un tel agencement de l'élément de renfort interne permet de réaliser un longeron présentant une bonne la résistance à un choc latéral et une bonne résistance à la torsion. L'élément de renfort permet notamment de réduire la compression du longeron lors d'un choc latéral tout en améliorant le passage des efforts reçus par le longeron d'une face à l'autre de celui-ci. La troisième paroi transversale apporte également de la raideur à l'élément de renfort lors d'un choc latéral. Le renfort étant interne, il ne gêne pas pour la fixation d'autres éléments structurels au longeron.

Les premières et deuxièmes parois d'accostages peuvent être fixées au longeron par des systèmes vis-écrous. Toutefois, ce type de fixation présente un coût relativement important. En outre, la géométrie de la fixation peut être difficile à maîtriser et l'élément de renfort interne peut être mal positionné. Aussi, afin de faciliter la fixation de l'élément de renfort, son positionnement et de réduire les coûts, les premières et deuxièmes parois d'accostage peuvent avantageusement être solidarisées aux parois latérales du profilé par des points de soudure.

Il est par ailleurs possible d'utiliser l'élément de renfort pour fixer un élément de structure au longeron. Ainsi, avantageusement, au moins une des parois latérales du profilé peut être percée d'au moins un orifice situé en regard d'une première ou d'une deuxième paroi d'accostage. Cette paroi d'accostage peut alors être pourvue d'au moins un écrou soudé situé en regard de l'au moins un orifice. Ce mode de réalisation est particulièrement avantageux pour fixer un élément de structure de manière démontable au longeron. Une seule et même pièce permet ainsi de renforcer le longeron en cas de choc latéral, d'améliorer sa résistance à la torsion et d'intégrer des fixations pour un autre élément.

Avantageusement, la paroi latérale du profilé peut être percée d'au moins un orifice situé en regard d'une première paroi d'accostage et d'au moins un orifice situé en regard d'une deuxième paroi d'accostage, chaque paroi d'accostage étant pourvue d'au moins un écrou soudé correspondant. Ceci permet de fixer un élément de structure au longeron à la hauteur de l'élément de renfort interne permettant ainsi un transfert des efforts latéraux d'un côté à l'autre du longeron, ce qui est particulièrement avantageux lorsque l'élément de renfort est situé dans le prolongement d'une traverse solidaire du longeron.

Avantageusement, la troisième paroi transversale de l'élément de renfort interne peut être pourvue d'au moins un orifice de positionnement afin de permettre une bonne mise en géométrie de l'élément de renfort à l'intérieur du profilé au moyen d'un outil approprié. Avantageusement, pour une meilleure résistance, l'élément de renfort peut être réalisé d'une seule pièce. Il peut s'agir par exemple d'une plaque métallique, typiquement en acier, voire en aluminium, mise en forme par découpe, pliage et/ou emboutissage. Avantageusement, l'élément de renfort pourra présenter un plan de symétrie vertical et transversal, ceci peut améliorer sa résistance et faciliter sa réalisation.

La première paroi transversale et la deuxième paroi transversale de l'élément de renfort peuvent être perpendiculaires aux parois latérales du profilé ou non. Lorsqu'elles ne sont pas perpendiculaires aux parois latérales du profilé, elles peuvent être légèrement inclinées l'une vers l'autre (elles forment par exemple entre elles un angle de 1 à 10°, généralement de 2 à 6°) dans une direction dirigée vers l'intérieur du véhicule lorsque le longeron est monté dans le véhicule. Cela peut permettre de libérer de l'espace pour l'accès de la pince à souder et aussi de positionner les parois d'accostage de l'élément de renfort en vis-à-vis de parois d'accostage d'une traverse s'étendant entre les longerons et de réaliser ainsi des points de soudure en trois épaisseurs (élément de renfort, longeron et traverse) favorable au comportement en choc, torsion et endurance de la structure de plancher ainsi formée.

La troisième paroi transversale peut avantageusement être parallèle à la paroi de fond du profilé.

Avantageusement, les première, deuxième et troisième parois transversales sont perpendiculaires deux à deux et perpendiculaires aux parois latérales du profilé du longeron.

En général, les parois latérales du profilé sont parallèles et perpendiculaires à la paroi de fond et à la plaque de fermeture du profilé.

L'invention a également pour objet une structure de plancher équipée d'au moins un longeron selon l'invention.

Dans un mode de réalisation préféré, la structure de plancher peut comprendre deux longerons et une pluralité de traverses reliant les longerons, chaque longeron étant un longeron selon l'invention, et chaque longeron comportant au moins un élément de renfort interne situé dans le prolongement d'une traverse, optionnellement de chaque traverse. Cet agencement permet une transmission optimale des efforts subis par le longeron à la traverse via le ou les éléments de renfort.

En particulier, la structure de plancher peut comprendre en outre, dans le prolongement de cette traverse, une poutre latérale fixée au longeron du côté opposé à ladite traverse, dans le prolongement de celle-ci. On comprend ainsi qu'un effort subit par cette poutre latérale est transmis à la traverse via l'élément de renfort interne qui est alors situé dans le prolongement de la traverse et de la poutre latérale.

Cette poutre latérale peut être fixée au longeron par au moins un système vis-écrou dont l'écrou est soudé à l'élément de renfort interne du longeron, la vis traversant un orifice correspondant du longeron et de la poutre de fixation, par exemple une platine. Cette poutre latérale peut ainsi être aisément fixée de manière rigide et démontable au longeron.

La structure de plancher peut comprendre au moins deux de ces poutres latérales fixées chacune au longeron dans le prolongement d'une traverse. Elle peut alors comprendre également une poutre de protection s'étendant longitudinalement et fixée aux poutres latérales. Cette poutre de protection et les poutres latérales forment alors un dispositif de protection latéral des chocs, particulièrement utile pour protéger un élément situé entre les longerons de la structure de plancher, tel qu'un module de batterie.

La structure de plancher peut notamment être faire partie d'un châssis de véhicule utilitaire, notamment formé d'une partie avant comprenant un châssis de cabine et d'une partie arrière comprenant les deux longerons et la pluralité de traverses reliant les longerons, les longerons étant solidaires d'un soubassement du châssis de cabine. La partie arrière de ce type de véhicule est destinée à être équipée en usine, ou chez des carrossiers transformateurs, d'une structure adaptée au besoin du client. Cette structure vient reposer sur les longerons et traverses de la partie arrière tout en étant fixée à cette dernière. La structure peut être une cellule fermée, réfrigérée ou non, une benne à ridelles ou un simple plateau. L'utilisation d'une structure de plancher selon l'invention pour ce type de véhicule utilitaire permet d'équiper celui-ci d'une batterie de traction électrique en assurant la protection de la batterie, notamment aux chocs latéraux, quelle que soit la structure qui équipe la partie arrière du châssis cabine.

L'invention a également pour objet un véhicule automobile comprenant un longeron ou une structure de plancher selon l'invention. L'invention est tout particulièrement adaptée aux véhicules électriques ou hybrides de type utilitaire.

D'autres particularités et avantages de l'invention ressortiront à la lecture de la description faite ci-après de plusieurs modes de réalisation particuliers de l'invention, donnés à titre indicatif mais non limitatifs, en référence aux dessins annexés sur lesquels :
[Fig. 1] la figure 1 est une vue en perspective d'une structure de plancher de véhicule selon un mode de réalisation de l'invention.
[Fig. 2] la figure 2 représente une vue de dessus d'une structure de plancher selon un autre mode de réalisation de l'invention.
[Fig. 3] la figure 3 est une vue partielle d'un longeron selon un mode de réalisation de l'invention.

Dans la présente description, les termes avant, arrière, supérieur, inférieur, font référence aux directions avant et arrière du véhicule, lorsque le longeron ou la structure de plancher selon l'invention sont montés sur un véhicule. Les axes X, Y, Z, correspondent respectivement à l'axe longitudinal (d'avant en arrière), transversal (orienté vers la droite du véhicule) et vertical du véhicule, ce dernier reposant sur le sol. La direction verticale correspond ainsi à la direction de la gravité.

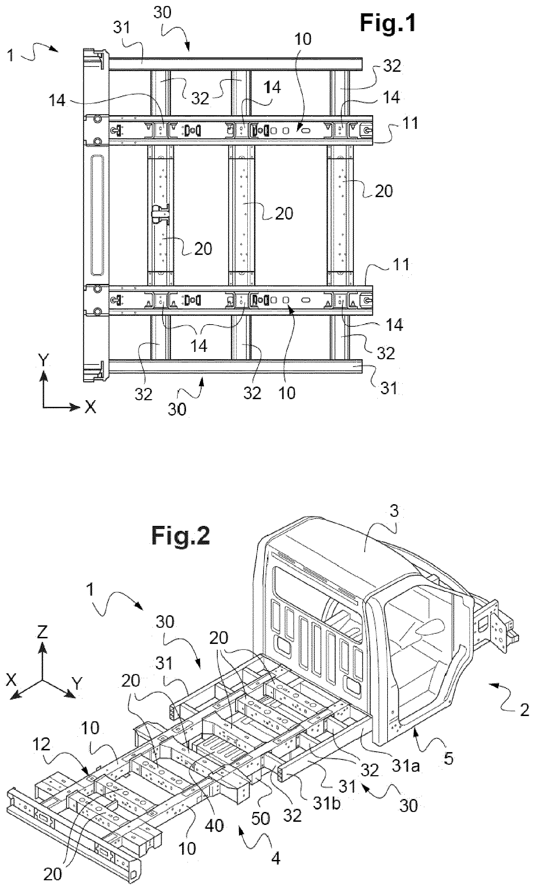

La figure 1 représente une structure de plancher 1 de véhicule comprenant deux longerons 10 à section transversale creuse et une pluralité de traverses 20 reliant les longerons 10.

Ce type de structure de plancher 1 peut être faire partie d'un châssis de véhicule formé, tel que représenté figure 2 d'une partie avant 2 comprenant un châssis de cabine 3 et d'une partie arrière 4 comprenant les deux longerons 10 et la pluralité de traverses 20. Les longerons 10 de la partie arrière 4 sont solidaires d'un soubassement 5 du châssis de cabine 3. De manière usuelle, pour davantage de rigidité, les longerons et les traverses, typiquement en acier, sont des pièces allongées creuses, de préférence à section transversale fermée, par exemple à section rectangulaire ou parallélépipédique. Ces pièces allongées peuvent être formées en deux parties assemblées l'une à l'autre et définissant une cavité interne s'étendant suivant leur direction longitudinale.

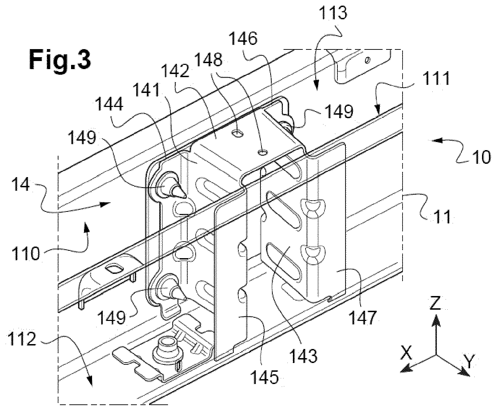

Tel que visible figure 3, le longeron 10 comprend ainsi un profilé longitudinal 11 à section transversale en forme de U comportant deux parois latérales longitudinales 110, 111 reliées par une paroi de fond 112 longitudinale et une ouverture 113 du côté opposé à la paroi de fond. Une plaque 12 s'étendant généralement horizontalement vient fermer l'ouverture 113 du profilé (voir figure 2). Dans cet exemple, les parois latérales 110 et 111 du profilé sont des parois verticales et longitudinales, perpendiculaires à la paroi de fond 112.

Le longeron 10 présente en outre un ou plusieurs éléments de renfort interne 14 disposés à l'intérieur du profilé 11.

Selon l'invention, l'élément de renfort 14 comprend trois parois transversales 141, 142, 143. La première paroi transversale 141 et la deuxième paroi transversale 142 s'étendent chacune depuis une paroi latérale 110 du profilé jusqu'à l'autre paroi latérale 111 du profilé, sur toute la hauteur des parois latérales 110, 111 du profilé, cette hauteur étant mesurée selon une direction perpendiculaire à la paroi de fond du profilé. La troisième paroi transversale 143 relie des bords des première et deuxième parois transversales 141, 142 du côté opposé à la paroi de fond du profilé, ici parallèlement à celui-ci. Ces trois parois transversales sont ainsi disposées selon un U dont l'ouverture est fermée par la paroi de fond 112 du profilé. Comme elles s'étendent sur toute la hauteur du profilé et d'une paroi latérale à l'autre de celui-ci, l'élément de renfort forme avec le profilé une sorte de caisson particulièrement résistant aux chocs reçus parallèlement aux parois transversales 141-143.

L'élément de renfort 14 comprend en outre des parois d'accostage 144, 145, 146, 147 prenant appui sur les parois latérales du profilé et renforçant ainsi davantage le longeron.

Les deux premières parois d'accostage 144, 145, en appui contre les parois latérales 110, 111 du profilé respectivement, s'étendent chacune depuis un bord de la première paroi transversale 141 dans une direction opposée à la deuxième paroi transversale 142, sur toute la hauteur des parois latérales 110, 111 du profilé. De manière similaire, les deux deuxièmes parois d'accostage 146, 147, en appui contre les parois latérales 110, 111 du profilé respectivement, s'étendent chacune depuis un bord de la deuxième paroi transversale 142 dans une direction opposée à la première paroi transversale 141, sur toute la hauteur des parois latérales 110, 111 du profilé.

Les premières et deuxièmes parois d'accostage 144-147 sont enfin solidarisées aux parois latérales 110, 111 du profilé. On obtient ainsi un renfort particulièrement robuste du longeron.

L'élément de renfort 14 peut être réalisé de manière très simple, par exemple par découpage, pliage et/ou par emboutissage d'une tôle en acier ou en aluminium. Il sera de préférence réalisé d'une pièce pour davantage de rigidité. Dans l'exemple, il est formé d'une tôle pliée en U, chaque bord d'une aile du U étant replié sensiblement à angle droit vers l'extérieur du U pour former une paroi d'accostage.

Dans l'exemple représenté figure 2, les première et deuxième parois transversales 141, 142 sont légèrement inclinées l'une vers l'autre. La troisième paroi transversale 143 présente alors une forme trapézoïdale. Lorsque le longeron est monté sur le véhicule, elles sont de préférence inclinées l'une vers l'autre de l'extérieur vers l'intérieur du véhicule. L'invention n'est toutefois pas limitée à ce mode de réalisation et les première et deuxième parois transversales 141, 142 étant généralement parallèles entre elles et perpendiculaires aux parois latérales 110 et 111 du profilé.

Enfin, tel que représenté sur les figures, l'élément de renfort 14 peut présenter un plan de symétrie transversal et vertical.

La fixation des parois d'accostage 144-147 aux parois latérales 110, 111 du profilé pourra être réalisé par vissage. Cette opération peut toutefois s'avérer complexe, notamment lorsqu'un positionnement précis de l'élément de renfort est souhaité. On privilégiera alors une fixation par des points de soudure.

Pour assurer la mise en géométrie de l'élément de renfort à l'intérieur du longeron, on pourra prévoir un ou plusieurs orifices, ici deux orifices 148 au travers de la troisième paroi transversale 143 servant de trous pilotes. Il est alors possible de saisir l'élément de renfort 14 au moyen d'un outil approprié et de l'amener à l'intérieur du profilé 11 en une position précise, avant de le fixer au profilé.

Tel que représenté figure 3, l'élément de renfort 14 peut être pourvu d'au moins un écrou soudé solidaire d'une paroi d'accostage. La paroi latérale 110 du profilé est alors percée d'un orifice situé en regard de cet écrou pour permettre le passage d'une vis au travers de la paroi latérale du longeron dans l'écrou soudé solidaire de l'élément de renfort. Une fixation démontable d'un élément de structure au longeron peut ainsi être réalisée facilement. Dans l'exemple représenté, deux écrous soudés 149 sont prévus sur la paroi d'accostage 144 fixée à la paroi latérale 110 et deux écrous soudés 149 sont prévus sur la paroi d'accostage 146 fixée à la même paroi latérale 111.

L'invention n'est bien entendu pas limitée par le nombre d'écrous soudés solidaires de l'élément de renfort, ni par le nombre de parois d'accostage équipées d'écrous soudés. On privilégiera néanmoins un nombre pair d'écrous et/ou un positionnement symétrique des écrous pour une meilleure répartition des efforts.

La structure de plancher 1 selon l'invention comporte un ou plusieurs éléments de renfort interne 14 avantageusement disposés dans le prolongement d'une traverse 20, tel que représenté figure 1, ceci pour une transmission optimale des efforts latéraux subis par le longeron vers les traverses. Selon le mode de fixations des traverses au longerons, on pourra prévoir ou non, des écrous soudés solidaires des parois d'accostage solidarisées à la paroi latérale du longeron qui doit être fixée à la traverse 20. Ces écrous soudés sont absents lorsque la traverse 20 est fixée au longeron par soudure.

Les longerons 10 selon l'invention sont particulièrement bien adaptés pour recevoir en fixation des éléments de protection latéraux ou autres éléments de structure, lesquels peuvent être fixés au longeron latéralement, dans le prolongement des traverses 20 et des éléments de renfort 14, notamment au moyen d'écrous soudés solidaires des éléments de renfort 14. L'utilisation de ces écrous soudés permet d'obtenir une liaison présentant une bonne tenue mécanique.

Les longerons 10 selon l'invention sont notamment particulièrement bien adaptés pour recevoir un dispositif de protection latérale 30 du type représenté sur les figures 1 et 2. Dans l'exemple représenté sur ces figures, ce dispositif de protection latérale 30 comprend une poutre de protection 31 dont une extrémité 31a est solidaire du châssis de cabine 5 et l'autre extrémité 31b est libre. La poutre de protection 31 s'étend parallèlement aux longerons 10 depuis le châssis de cabine 5 sur une portion de longueur de la partie arrière 4 de la structure de plancher 1.

Chaque dispositif de protection latérale 30 comprend en outre, dans le prolongement de chaque traverse 20 une poutre latérale 32 formant un boîtier absorbeur de choc. Cette poutre latérale 32 est solidaire de la poutre de protection 31 et du longeron 10. Ainsi, chaque poutre latérale 32 est alignée avec une traverse 20 suivant la direction transversale, ce qui permet de transférer les chocs subis par la poutre de protection 31 d'un côté à l'autre du véhicule via les poutres latérales 32, les traverses 20 et les éléments de renfort 14.

Lorsque les éléments de renfort 14 sont équipés d'écrous soudés, il est possible de réaliser les différentes pièces du dispositif de protection latérale 20 en aluminium, notamment par extrusion, de les fixer les unes aux autres par des cordons de soudure, puis de les fixer au moyen de vis sur les longerons. Il est alors possible de dimensionner aisément la poutre de protection 31 ainsi que chaque poutre latérale 32 de manière optimale pour absorber l'énergie d'un choc latéral défini. On pourra notamment déterminer une épaisseur des parois et/ou une hauteur et/ou une largeur (mesurée suivant la direction transversale lorsque le dispositif de protection latérale est assemblé à la structure de plancher 10) de chaque pièce appropriée(s) pour absorber l'énergie d'un choc latéral défini.

Les poutres latérales peuvent par exemple être fixées par des vis aux longerons via des platines s'étendant verticalement et longitudinalement, ces platines étant appliquées contre la paroi latérale 110 ou 111 du longeron auquel elles sont fixées.

La structure de plancher 1 selon l'invention permet ainsi de protéger un ou plusieurs modules de stockage d'énergie 40, tel que des modules de batterie électrique, typiquement supportés par une structure de support 50 qui est fixée à la structure de plancher, sous celle-ci, généralement aux longerons 10. Tel que visible figure 2, la structure de support 50 s'étend entre les longerons 10 et les traverses 20 de la partie arrière sur une portion de longueur de celle-ci. La structure de support 50 s'étend également en partie sous le soubassement du châssis de cabine 5. Tel que représenté figure 2, les deux dispositifs de protection latérale 30 s'étendent sur toute la longueur de la portion de longueur de la partie arrière sur laquelle s'étend la structure de support 50. Ainsi en cas de choc latéral, le dispositif de protection latérale 30 peut absorber l'énergie du choc, limiter la déformation du longeron de la structure de plancher auquel il est fixé, et ainsi limiter le risque d'une rupture des fixations de la structure de support 50 à ce longeron.

On notera que ce type de dispositif de protection latérale 30 peut également équiper un véhicule thermique lorsqu'un élément sensible (réservoir ou autre) que l'on souhaite protéger des chocs latéraux est fixé à la structure de plancher à proximité du châssis de cabine. L'invention peut ainsi aussi bien s'appliquer à un véhicule automobile thermique qu'à un véhicule automobile électrique, bien qu'une utilisation pour un véhicule automobile électrique ou hybride soit préférée.

## Revendications

1. Longeron (10) de véhicule automobile à section transversale creuse comprenant :
- un profilé (11) longitudinal à section transversale en forme de U comportant deux parois latérales (110, 111) reliées par une paroi de fond (112) et une ouverture (113) du côté opposé à la paroi de fond,
- une plaque (12) fermant l'ouverture du profilé,
- au moins un élément de renfort interne (14) disposé à l'intérieur du profilé,
**caractérisé en ce que** l'élément de renfort interne (14) comprend :
- une première paroi transversale (141) et une deuxième paroi transversale (142) s'étendant chacune depuis une paroi latérale (110) du profilé jusqu'à l'autre paroi latérale (111) du profilé, sur toute la hauteur des parois latérales du profilé mesurée selon une direction perpendiculaire à la paroi de fond du profilé,
- une troisième paroi transversale (143) reliant des bords des première et deuxième parois transversales du côté opposé à la paroi de fond (112) du profilé,
- deux premières parois d'accostage (144, 145) en appui chacune contre une paroi latérale (110, 111) du profilé et s'étendant chacune depuis un bord de la première paroi transversale (141) dans une direction opposée à la deuxième paroi transversale (142), sur toute la hauteur des parois latérales (110, 111) du profilé, et,
- deux deuxièmes parois d'accostage (146, 147) en appui chacune contre une paroi latérale(1 10, 111) du profilé et s'étendant chacune depuis un bord de la deuxième paroi transversale (142) dans une direction opposée à la première paroi transversale (141), sur toute la hauteur des parois latérales du profilé,
les premières et deuxièmes parois d'accostage étant solidarisées aux parois latérales du profilé.

2. Longeron (10) selon la revendication 1, **caractérisé en ce que** les premières et deuxièmes parois d'accostage (141, 142) sont solidarisées aux parois latérales (110, 111) du profilé par des points de soudure.

3. Longeron (10) selon la revendication 1 ou 2, **caractérisé en ce qu'**au moins une des parois latérales (110, 111) du profilé est percée d'au moins un orifice situé en regard d'une première ou d'une deuxième paroi d'accostage (144-147) et **en ce que** ladite paroi d'accostage est pourvue d'au moins un écrou soudé (149) situé en regard de l'au moins un orifice.

4. Longeron (10) selon la revendication 3, **caractérisé en ce que** la paroi latérale (110, 111) du profilé est percée d'au moins un orifice situé en regard d'une première paroi d'accostage (144) et d'au moins un orifice situé en regard d'une deuxième paroi d'accostage (146), chaque paroi d'accostage (144, 146) étant pourvue d'au moins un écrou soudé (149) correspondant.

5. Longeron (10) selon l'une quelconque des revendications 1 à 4, **caractérisé en ce que** la troisième paroi transversale (143) de l'élément de renfort interne est pourvue d'au moins un orifice de positionnement (148).

6. Longeron (10) selon l'une quelconque des revendications 1 à 5, **caractérisé en ce que** l'élément de renfort interne est réalisé d'une seule pièce.

7. Structure de plancher (1) de véhicule comprenant deux longerons (10) et une pluralité de traverses (20) reliant les longerons, **caractérisée en ce que** chaque longeron est un longeron (10) selon l'une quelconque des revendications 1 à 6, et **en ce que** chaque longeron (10) comporte au moins un élément de renfort interne (14) situé dans le prolongement d'une traverse (20).

8. Structure de plancher (1) selon la revendication 7, **caractérisée en ce qu'**elle comprend en outre, dans le prolongement de ladite traverse, une poutre latérale (32) fixée au longeron (10) du côté opposé à ladite traverse (20), dans le prolongement de celle-ci.

9. Structure de plancher (1) selon la revendication 8, **caractérisée en ce que** ladite poutre latérale (32) est fixée au longeron (10) par au moins un système vis-écrou dont l'écrou est soudé à l'élément de renfort interne (14) du longeron et dont la vis traverse un orifice correspondant du longeron et de la poutre latérale.

10. Structure de plancher (1) selon la revendication 8 ou 9, **caractérisée en ce qu'**elle comprend au moins deux poutres latérales (32) fixées chacune au longeron (10) dans le prolongement d'une traverse (20) et une poutre de protection (31) s'étendant longitudinalement et fixée aux poutres latérales.
